# EUROPEAN PATENT APPLICATION

(11) **EP 2 660 504 A1**
(43) Date of publication of application: **06.11.2013**
(21) Application number: 12192694.3
(22) Date of filing: 15.11.2012
(51) Int. Cl.: F21K 99/00, F21V 17/00, F21V 29/00, F21Y 101/02, F21Y 105/00

(54) **Light emitting device**

(30) Priority: 02.05.2012 TW 101115500
(71) Applicant: Delta Electronics, Inc., Taoyuan Hsien 333 (TW)
(72) Inventor: Du, Cheng-Hsiu, 333 Taoyuan Hsien (TW); Wang, Horng-Jou, 333 Taoyuan Hsien (TW)
(74) Representative: Wablat Lange Karthaus

(57) **Abstract**

A light emitting device includes a body, at least one light emitting unit, at least one heat dissipating element and a power connecting element. The body has a supporting portion and a locking portion. The supporting portion is disposed on one end of the locking portion. The light emitting unit is disposed on the supporting portion. The heat dissipating element has an opening. The heat dissipating element is connected detachably with the locking portion. The power connecting element is connected with the body. The light emitting device having detachable heat dissipating elements can not only reduce the cost and time of research/development and manufacture but also increase the flexibility of the products.

## Description

### BACKGROUND OF THE INVENTION

### Field of Invention

The invention relates to a light emitting device and, in particular, to a light emitting device using a light emitting diode.

### Related Art

With the rising awareness of environmental protection, the traditional light bulbs with high power consumption and short life have been considered as subjects to be replaced since they are failed to meet the green Earth demand of energy-saving. However, with the improvement of semiconductor technology, the emergence of LED lights offers consumers with another choice. The characteristic of luminescence of LED lights results in the advantages of low power consumption and long life. In addition, the characteristics of small sizes, multiple varieties of colors, and the fast responses add more business values to LED lights. Therefore, the use of LED lights has become more and more popular.

Although LED lights have the advantage of energy saving, high temperature is still a problem of LED lights that needs to be overcome. In order to improve the brightness of the LED lights, LEDs are arranged densely, which causes the problem of heat source concentration. An effective heat dissipation means is required, otherwise the life of the LED lights will be significantly reduced, which cannot meet consumer demands and also reduces the value of the environmental protection.

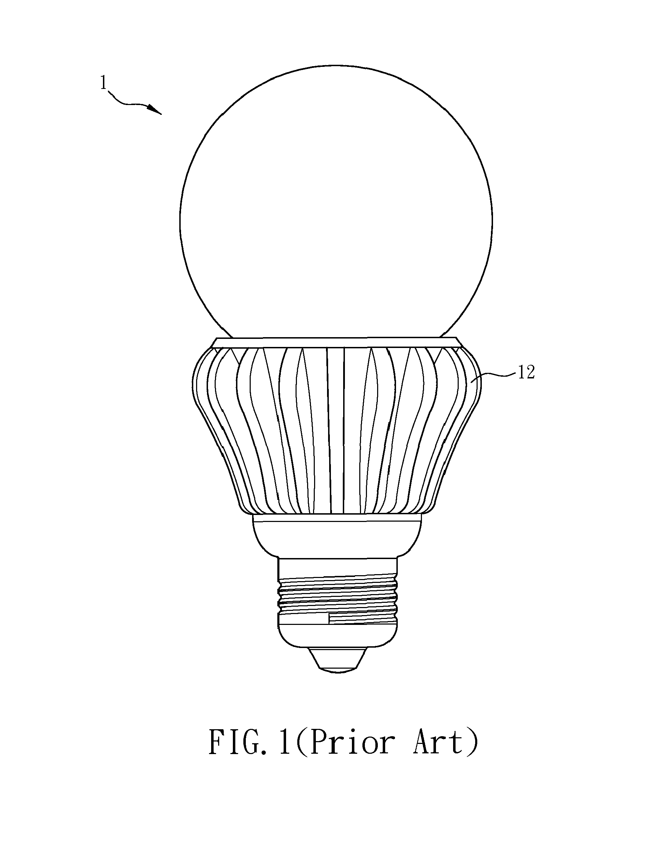

As shown in FIG. 1, a general household LED light 1 uses heat dissipating fins 12 to improve heat dissipating efficiency. However, heat dissipating fins 12 usually are in a single fixed form, and one heat dissipating fin is only suitable for certain LED lights of specific power and cannot be assembled or detached freely. In other words, when developing a product of different power, it is necessary to re-develop heat dissipating fins suitable to that product, which results in the re-molding during manufacturing and thus increases of the cost and time required during research and development. Moreover, since the style of the product is fixed after manufactured, consumers are not allowed to arbitrarily change its appearance, which reduces the flexibility of the product.

Therefore, it is an important subject to provide a light emitting device having a heat dissipating element that can be assembled or detached arbitrarily in response to different power needs, thereby reducing the cost and time of research and development, and allowing to change the appearance arbitrary so as to increase the flexibility of the product.

### SUMMARY OF THE INVENTION

In view of the foregoing subject, an objective of the invention is to provide a light emitting device having a heat dissipating element that can be assembled or detached arbitrarily in response to different power needs. Therefore the reductions of cost and time of research and development can be achieved, and since a user is allowed to change the appearance arbitrary, the flexibility of the product can be increased.

To achieve the above objective, the present invention discloses a light emitting device comprising a body, at least one light emitting unit, at least one heat dissipating element, and a power connecting element. The body has a supporting portion and a locking portion, and the supporting portion is disposed at one end of the locking portion. The light emitting unit is disposed at the supporting portion. The heat dissipating element has an opening, and is detachably connected to the locking portion by the opening. The power connecting element is connected with the body.

In one embodiment, when the light emitting device comprises a plurality of heat dissipating elements, the heat dissipating elements are connected to the locking portion sequentially.

In one embodiment, the heat dissipating element has a planar structure or a three-dimensional structure.

In one embodiment, the heat dissipating element is a ring-shaped planar fin.

In one embodiment, the inner edge of the ring-shaped planar fin is circular, and the outer edge thereof has a regular or irregular shape.

In one embodiment, the ring-shaped planar fin has a closed configuration or an open configuration.

In one embodiment, when the light emitting device comprises a plurality of light emitting units, the light emitting units are arranged in linear, in an array, in a spiral, in a concentric circle, irregularly, or combinations thereof.

In one embodiment, the supporting portion has at least one surface, and the light emitting unit is disposed at the surface.

In one embodiment, the surface comprises at least one flat surface, at least one curved surface, or a combination thereof.

In one embodiment, the light emitting device further comprises a driving circuit electrically connect with the light emitting unit.

In one embodiment, the driving circuit is disposed in the body or outside the body.

In one embodiment, the light emitting device further comprises a lampshade connected with the body to cover the light emitting unit.

In one embodiment, the light emitting device further comprises an insulated housing disposed in the body.

In one embodiment, the heat dissipating element is detachably connected with the locking portion by screwing, engaging, wedging or hooking.

In one embodiment, the locking portion has a solid columnar body or a hollow columnar body.

As mentioned above, the light emitting device of the invention allows a user to assemble heat dissipating elements in view of different power requirements by detachable heat dissipating elements. Compared with the conventional art, the light emitting device of the invention eliminates the need of developing the heat dissipating element for different power requirements when developing products of different powers. Re-molding is not required during manufacturing, and the user can change the appearance arbitrarily by replacing or re-arranging heat dissipating elements based on personal preference. Not only the cost and time to research and develop products are reduced, but also the flexibility of the products is increased.

### BRIEF DESCRIPTION OF THE DRAWINGS

The present invention will become more fully understood from the subsequent detailed description and accompanying drawings, which are given by way of illustration only, and thus are not limitative of the present invention, and wherein:

FIG. 1 is a schematic diagram showing a conventional LED light;

FIG. 2A is a schematic diagram showing a light emitting device according to a preferred embodiment of the invention;

FIG. 2B is an exploded diagram showing a light emitting device according to a preferred embodiment of the invention;

FIG. 3A to FIG. 3C are partially enlarged schematic diagrams showing different aspects of the shapes of the supporting portions and the arrangements of the light emitting units;

FIG. 4A to FIG. 4I are partially enlarged schematic diagrams showing different aspects of the heat dissipating elements;

FIG. 5 is a schematic diagram showing a light emitting device according to another preferred embodiment of the invention;

FIG. 6 is a schematic diagram showing a light emitting device according to another preferred embodiment of the invention;

FIG. 7 is a schematic diagram showing a light emitting device according to another preferred embodiment of the invention;

FIGS. 8A and 8B are schematic diagrams showing a light emitting device according to another preferred embodiment of the invention; and

FIG. 9 is a schematic diagram showing a light emitting device according to another preferred embodiment of the invention.

### DETAILED DESCRIPTION OF THE INVENTION

The present invention will be apparent from the following detailed description, which proceeds with reference to the accompanying drawings, wherein the same references relate to the same elements.

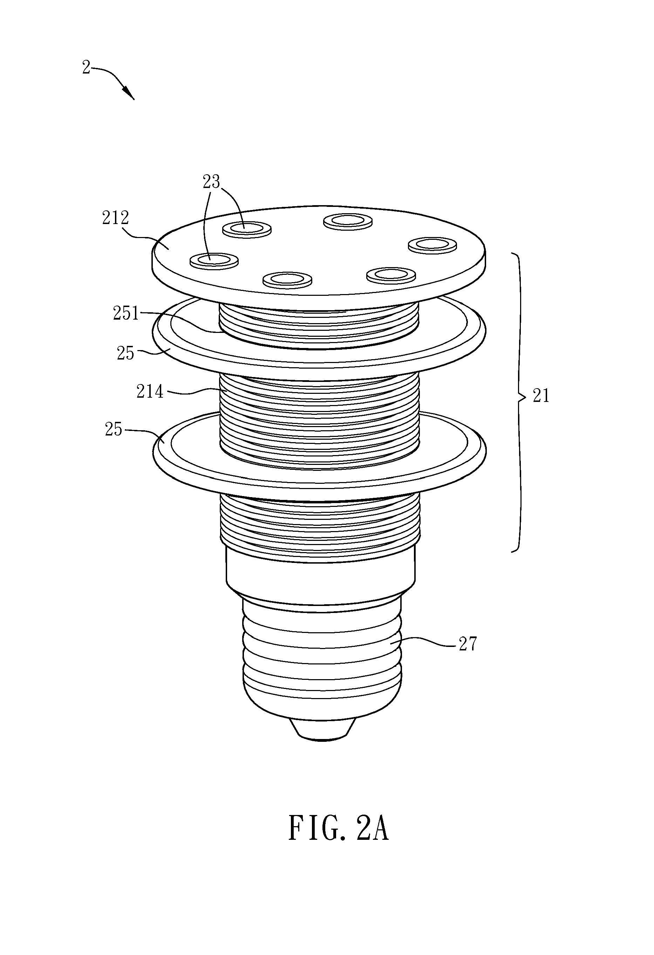

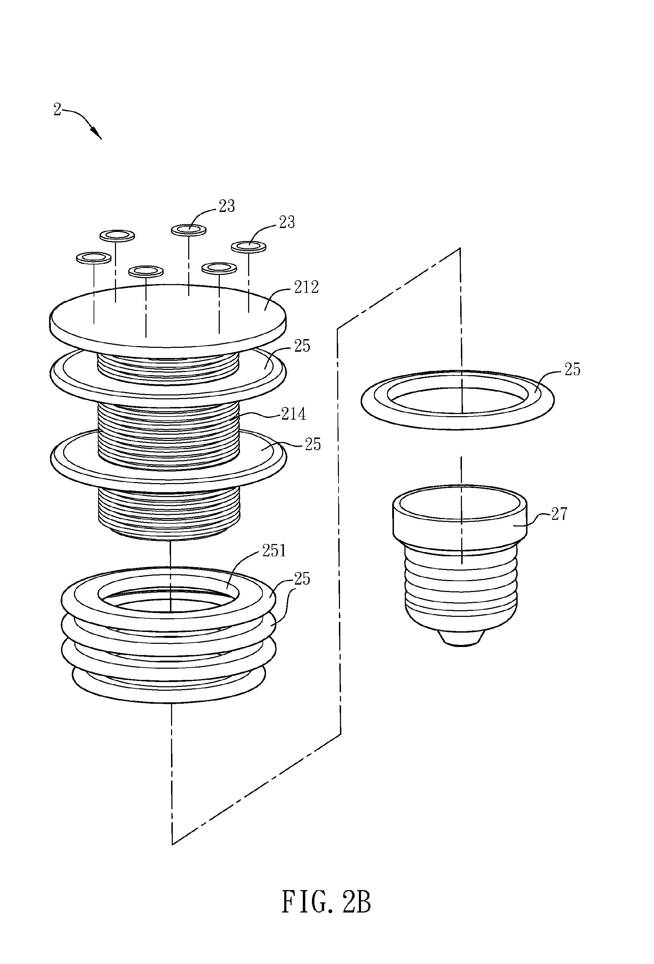

FIG. 2A is a schematic diagram showing a light emitting device according to a preferred embodiment of the invention, and FIG. 2B is an exploded diagram showing a light emitting device according to a preferred embodiment of the invention. Referring to FIGS. 2A and 2B, a light emitting device 2 includes a body 21, at least one light emitting unit 23, at least one heat dissipating element 25, and a power connecting element 27.

The body 21 has a supporting portion 212 and a locking portion 214. The supporting portion 212 is disposed at one end of the locking portion 214. The locking portion 214 can have a solid or hollow columnar body.

The light emitting unit 23 may be a light emitting diode or an organic light emitting diode, and can be in the form of a die or a package. The light emitting diode 23 is disposed at the supporting portion 212.

The heat dissipating element 25 has an opening 251. The heat dissipating element 25 is detachably connected to the locking portion 214 by the opening 251. The opening 251 may have a locking structure corresponding to the locking portion 214, so that the heat dissipating element 25 and the locking portion 214 may be connected by, for example but not limited to, screwing, engaging, wedging, and hooking.

The power connecting element 27 is connected with the body 21 to electrically connecting a power source (not shown) for the operation of the light emitting unit 23.

Further speaking, the body 21 may be made of heat dissipating material, for example but not limited to various metals such as aluminum, copper, iron, nickel, titanium, or the alloy thereof. Moreover, if the power of the light emitting device 2 is lower, the material of the body 21 may also be plastics.

In detail, the supporting portion 212 may have at least on surface, and the light emitting unit 23 may be disposed on that surface. The surface may be a flat surface, a curved surface, or the combination thereof. Therefore, when the number of the light emitting unit 23 is plural, they may have different ways of arrangement. The descriptions below will be focused on different aspects of the shapes of the supporting portion 212 and the arrangements of the light emitting unit 23.

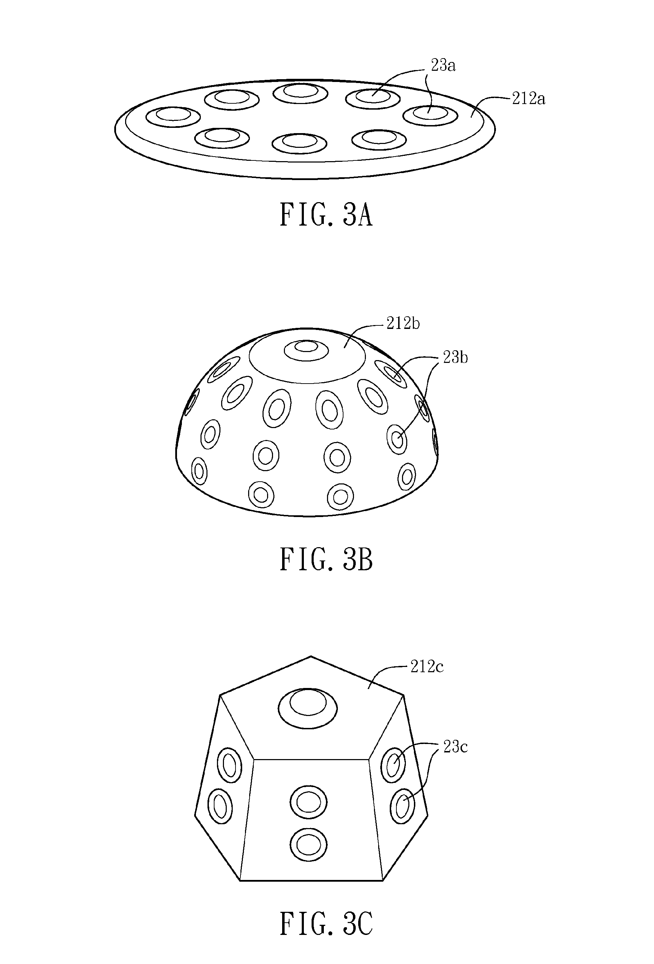

As shown in FIG. 3A, the supporting portion 212a has a surface, and the light emitting units 23a are arranged in a circle. As shown in FIG. 3B, the supporting portion 212b has a curved surface, and the light emitting units 23b are arranged regularly in concentric circles. However, the light emitting units 23b may also be arranged in a mutually dislocated way (not shown). As shown in FIG. 3C, the supporting portion 212c has a plurality of flat surfaces, and the light emitting nits 23c are arranged linearly. Alternatively, the light emitting units 23c may also be arranged in an array (not shown). Moreover, the arrangement of the light emitting units 23c may be in a spiral or irregularly (not shown). Since the plurality of light emitting unit can be arranged differently or arranged as the combinations of the arrangements mentioned above in view of actual needs, the arrangements mentioned above are exemplary only without limiting sense.

Specifically speaking, the heat dissipating element 25 may be assembled are detached arbitrarily, and the number can be increased or decreased according to the power of the light emitting device 2 or the preference of the user. Furthermore, to improve the heat dissipating efficiency but also taking into account the flexibility of appearance, the shape of the heat dissipating element 25 may have many variations. The different aspects of the heat dissipating element 25 will be described below.

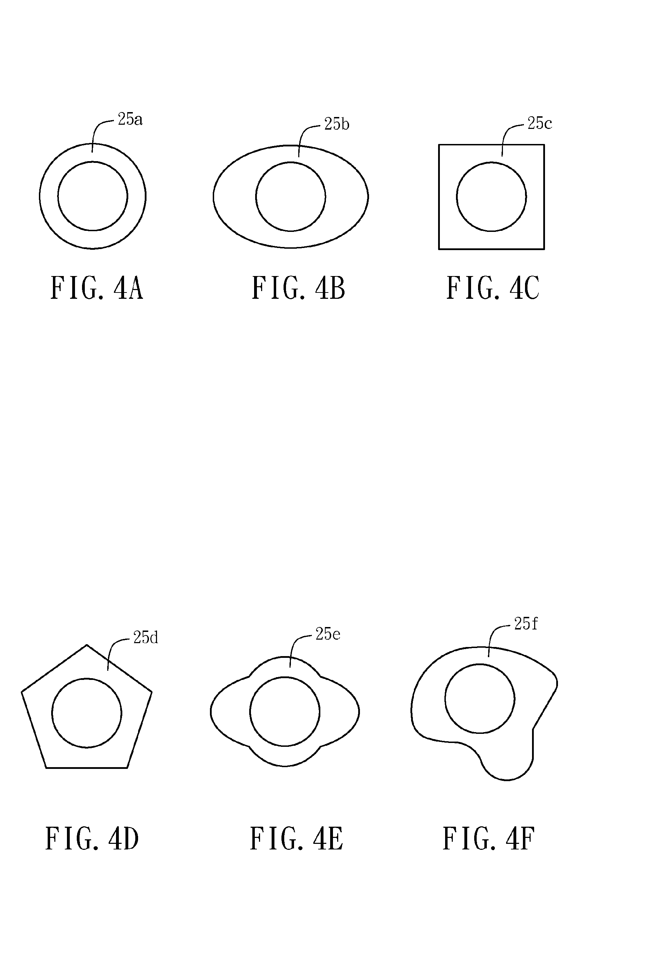

Referring to FIGS. 4A to 4F, the heat dissipating elements 25a to 25f have planar structures. Specifically speaking, they are ring-shaped planar fins, the inner edges of which are circular to be detachably connected with the locking portion 214. The outer edges may be in different shapes. For example, the outer edge of the heat dissipating element 25a is in the shape of a circle, the outer edge of the heat dissipating element 25b is in the shape of an ellipse, the outer edge of the heat dissipating element 25c is in the shape of a square, the outer edge of the heat dissipating element 25d is in the shape of a polygon, and the outer edge of the heat dissipating element 25e is in the shape of a flower petal. The examples above are in regular shapes. Alternatively, the outer edge of the heat dissipating element 25f is in an irregular shape.

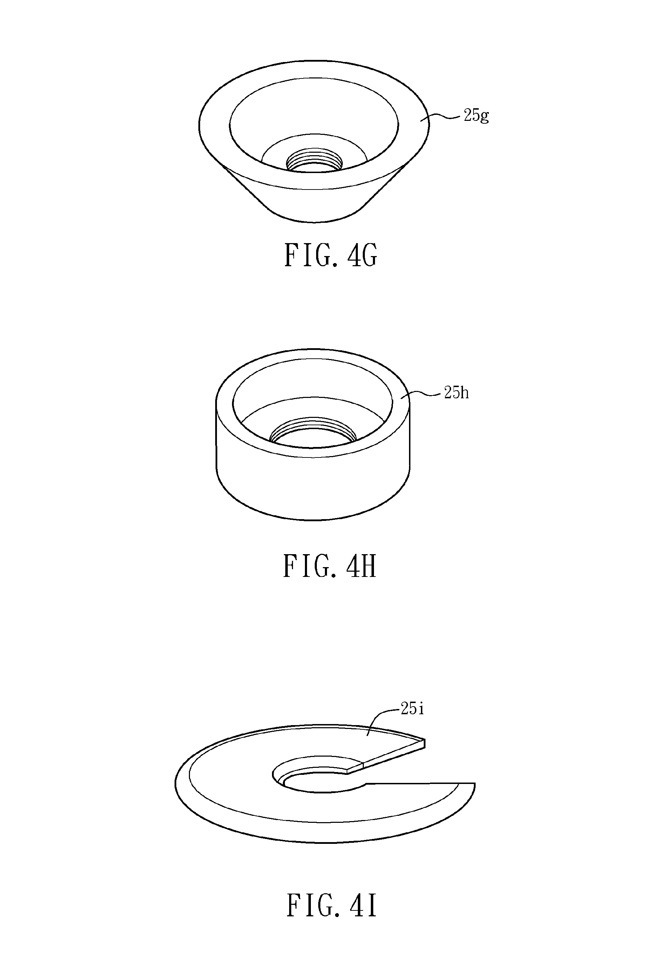

Except for a planar structure, referring to FIGS. 4G and 4H, the heat dissipating element 25g and 25h may also have three-dimensional structures. The heat dissipating element 25g is the shape of a circular cone, and the heat dissipating element 25h is in the shape of a cylinder. Except for the above, the heat dissipating element may also be in the shape of a pyramidal, a column, an irregular cone or an irregular column (not shown).

With reference to FIG. 4I, the heat dissipating element 25i may be not a closed configuration as mentioned above, but may be an open configuration.

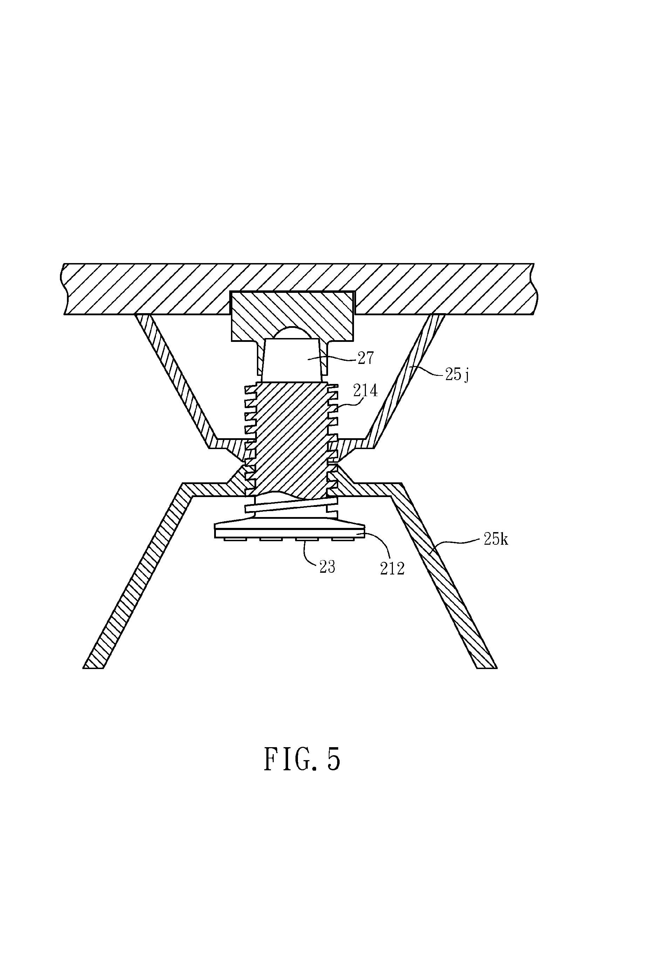

Based on the above, a user may choose a plurality of kinds of heat dissipating elements to use with. As shown in FIG. 5, two different heat dissipating elements 25j and 25k are disposed in opposite directions to not only achieve the effect of heat dissipation but also cover the joints between the power connecting element 27 and the wall or the ceiling to further achieve the effect of increasing aesthetics. Of course, same heat dissipating elements can be used to be disposed in opposite directions.

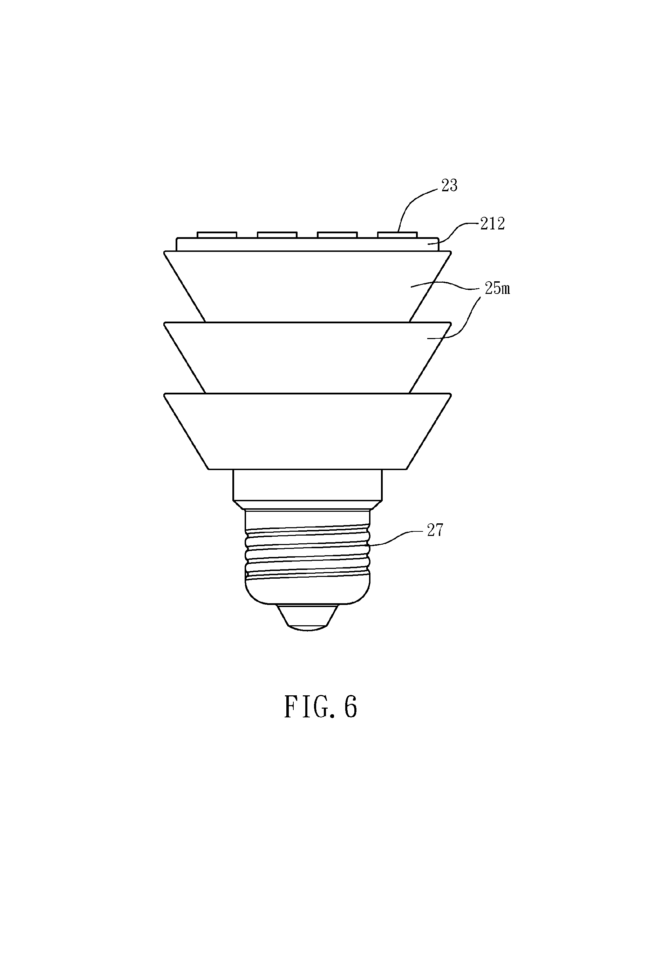

The use not only can arbitrarily choose one or more kinds of heat dissipating elements, but also can determine the numbers used to be detachably connected at the locking portion 214. As shown in FIG. 6, when the number of the heat dissipating element 25m is plural and the heat dissipating elements 25m have three-dimensional structures, the heat dissipating elements 25m may be connected to locking portions 214 sequentially.

Moreover, the material of the heat dissipating element may be heat dissipating material, for example but not limited to ceramics, graphite or various metals such as aluminum, copper, iron, nickel, titanium or the alloy thereof. Moreover, if the power of the light emitting device 2 is lower, the material of the heat dissipating element may comprise plastic material.

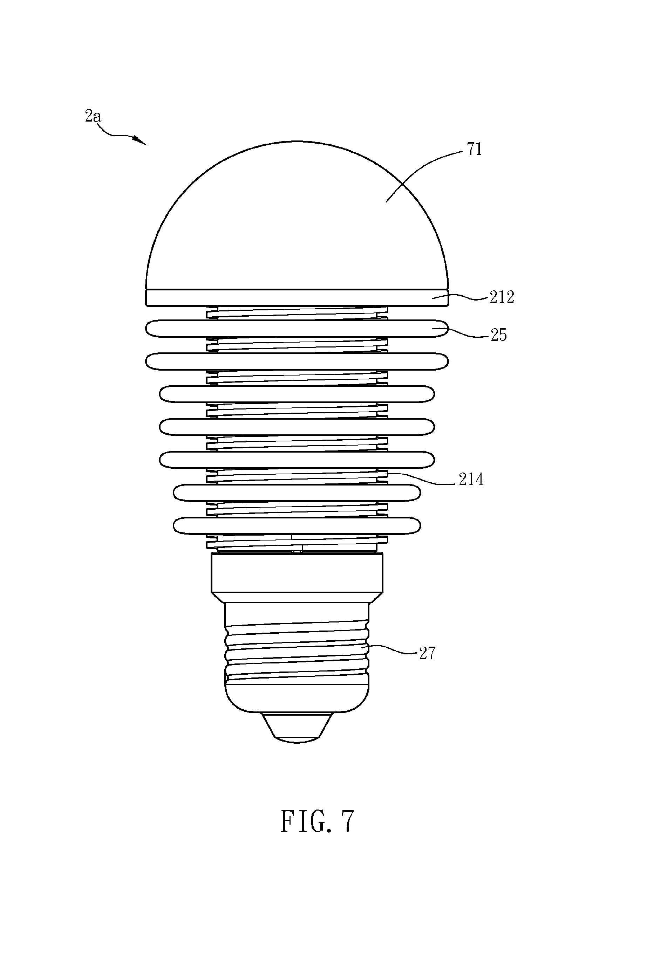

Referring to FIG. 7, to protect the light emitting unit and make its appearance more beautiful, the light emitting device 2a may further include a lampshade 71 connected with the body 21 to cover the light emitting unit (not shown). The invention does not limit the appearance of the lampshade 71. It may be of a full-surrounded type or half-surrounded type with a regular or irregular shape. Moreover, to make the light emitting device 2a to show more visual effects, the lampshade 71 may further include a plurality of light wavelength conversion particles or optical diffusing particles (not shown). The light wavelength conversion particles or optical diffusing particles may be doped in the material of the lampshade 71 and formed integrally, or applied to the inner surface of the lampshade 71 in a single layer or multiple layers according to actual needs. Specifically speaking, the light wavelength conversion particles comprise, for example but not limited to, yttrium aluminum garnet (YAG), silicate, terbium aluminum garnet (TAG), oxide phosphor, nitride phosphor, or aluminum oxide. The optical diffusing particles are, but not limited to, Silicon dioxide (SiO₂), aluminum oxide (Al₂O₃), titanium dioxide (TiO₂), calcium fluoride (CaF₂) and calcium carbonate (CaCO₃), or barium sulfate (BaSO₄).

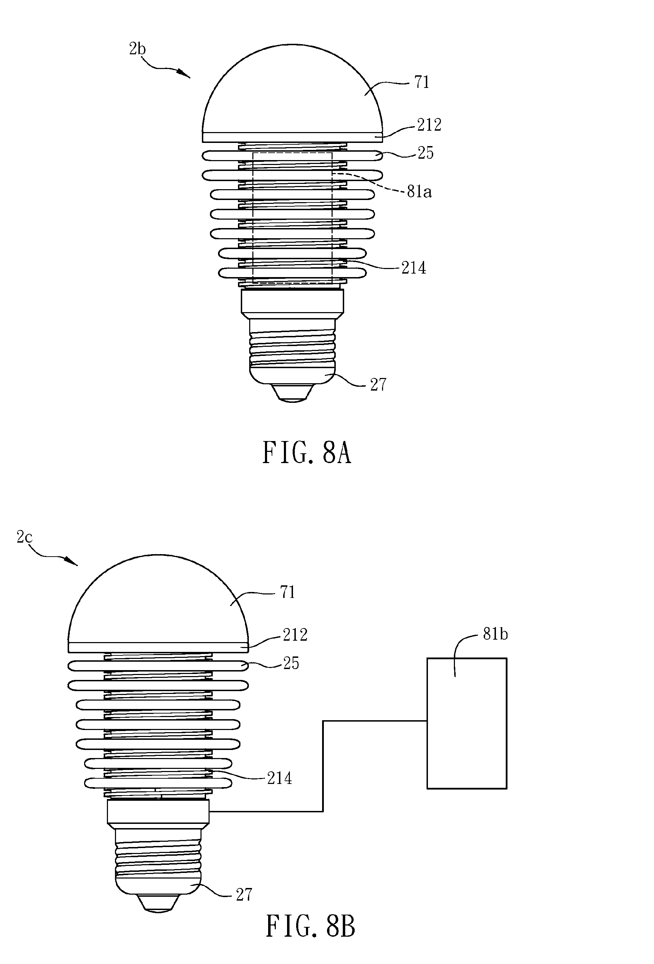

FIGS. 8A and 8B are schematic diagrams showing a light emitting device according to another preferred embodiment of the invention. As shown in FIG. 8A, the light emitting device 2b may further include a driving circuit 81a electrically connect with the light emitting unit (not shown) and disposed in the body 21. As shown in FIG. 8B, the driving circuit 81b of the light emitting device 2c may be disposed outside of the body 21 to drive the light emitting unit (not shown).

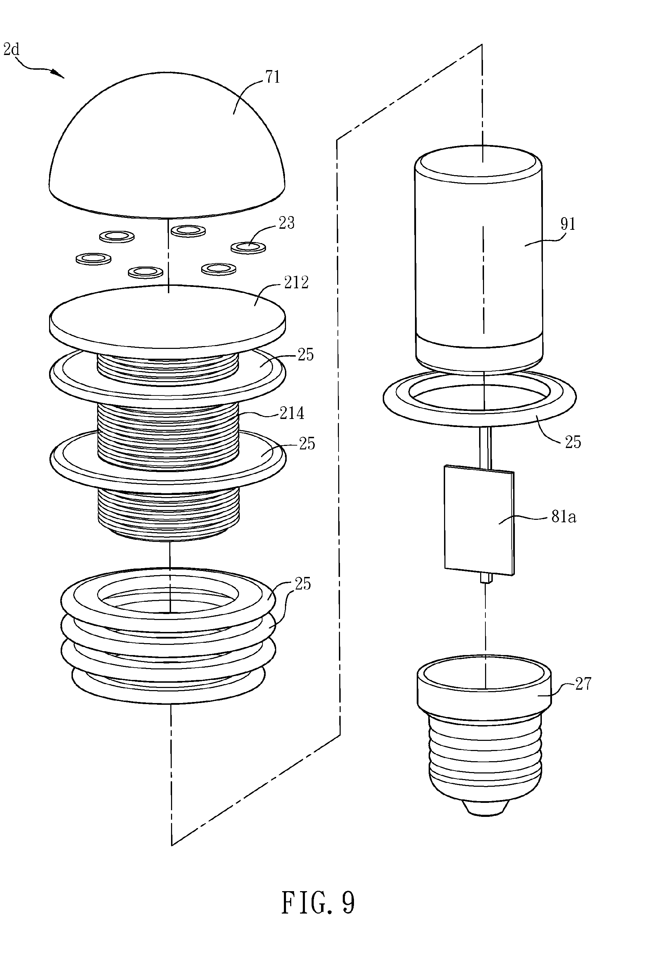

FIG. 9 is a schematic diagram showing a light emitting device according to another preferred embodiment of the invention. Referring to FIG. 9, the light emitting device 2d may further include an insulated housing 91 disposed in the body (not shown) to isolate the electricity inside the body (not shown) and further to lower the probability of an accidental electrical shock when touching the light emitting device 2d.

To sum up, the light emitting device of the invention allows a user to assemble heat dissipating elements in view of different power requirements by detachable heat dissipating elements. Compared with the conventional art, the light emitting device of the invention eliminates the need of developing the heat dissipating element for different power requirements when developing products of different powers. Re-molding is not required during manufacturing, and the user can change the appearance arbitrarily by replacing or re-arranging heat dissipating elements based on personal preference. Not only the cost and time to research and develop products are reduced, but also the flexibility of the products is increased.

Although the present invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the present invention.

## Claims

1. A light emitting device, comprising:
a body having a supporting portion and a locking portion, the supporting portion being disposed at one end of the locking portion;
at least one light emitting unit disposed at the supporting portion;
at least one heat dissipating element having an opening, the heat dissipating element being detachably connected to the locking portion by the opening; and
a power connecting element connected with the body.

2. The light emitting device according to claim 1, wherein when the light emitting device comprises a plurality of the heat dissipating elements, the heat dissipating elements are connected to the locking portion sequentially.

3. The light emitting device according to claim 1, wherein the heat dissipating element has a planar structure or a three-dimensional structure.

4. The light emitting device according to claim 3, wherein the heat dissipating element is a ring-shaped planar fin.

5. The light emitting device according to claim 4, wherein the inner edge of the ring-shaped planar fin is circular, and the outer edge thereof has a regular or irregular shape.

6. The light emitting device according to claim 4, wherein the ring-shaped planar fin has a closed configuration or an open configuration.

7. The light emitting device according to claim 1, wherein when the light emitting device comprises a plurality of the light emitting units, the light emitting units are arranged in linear, in an array, in a spiral, in a concentric circle, irregularly, or combinations thereof.

8. The light emitting device according to claim 1, wherein the supporting portion has at least one surface, and the light emitting unit is disposed at the surface.

9. The light emitting device according to claim 8, wherein the surface comprises at least one flat surface, at least one curved surface, or a combination thereof.

10. The light emitting device according to claim 1, further comprising:
a driving circuit electrically connected with the light emitting unit.

11. The light emitting device according to claim 10, wherein the driving circuit is disposed in the body or outside the body.

12. The light emitting device according to claim 1, further comprising:
a lampshade connected with the body to cover the light emitting unit.

13. The light emitting device according to claim 1, further comprising:
an insulated housing disposed in the body.

14. The light emitting device according to claim 1, wherein the heat dissipating element is detachably connected with the locking portion by screwing, engaging, wedging or hooking.

15. The light emitting device according to claim 1, wherein the locking portion has a solid columnar body or a hollow columnar body.

16. The light emitting device according to claim 12, wherein the lampshade further includes a plurality of light wavelength conversion particles.

17. The light emitting device according to claim 16, wherein the light wavelength conversion particles comprises yttrium aluminum garnet (YAG), silicate, terbium aluminum garnet (TAG), oxide phosphor, nitride phosphor, or aluminum oxide

18. The light emitting device according to claim 16, wherein the lampshade further includes a plurality of optical diffusing particles.

19. The light emitting device according to claim 18, wherein the optical diffusing particles comprise silicon dioxide (SiO₂), aluminum oxide (Al₂O₃), titanium dioxide (TiO₂), calcium fluoride (CaF₂), calcium carbonate (CaCO₃), or barium sulfate (BaSO₄).
